Europäisches Patentamt

European Patent Office

Office européen des brevets

(11) Publication number: **0 163 737**
**A1**

# EUROPEAN PATENT APPLICATION

published in accordance with Art. 158(3) EPC

(21) Application number: 84903758.5

(51) Int. Cl.⁴: **B 25 J 19/04**

(22) Date of filing: **11.10.84**

Data of the international application taken as a basis:
(86) International application number:
**PCT/JP 84/00480**
(87) International publication number:
**WO 85/01910 (09.05.85 85/11)**

(30) Priority: 26.10.83 JP 165796/83 U

(43) Date of publication of application: 11.12.85
Bulletin 85/50

(84) Designated Contracting States: DE FR GB

(71) Applicant: FANUC LTD, 3580, Shibokusa Aza-Komanba
Oshino-mura, Minamitsuru-gun Yamanashi 401-05 (JP)

(72) Inventor: KURAKAKE, Mitsuo, 103, Izumi-heights 3-10,
Tamadaira 3-chome, Hino-shi Tokyo 191 (JP)
Inventor: MIYASHITA, Hideo, 38-23,
Asahigaoka 2-chome Hino-shi, Tokyo 191 (JP)
Inventor: OTSUKA, Shoichi, 71-302 Kodan-jutaku 6,
Tamadaira 4-chome, Hino-shi Tokyo 191 (JP)

(74) Representative: Billington, Lawrence Emlyn et al,
HASELTINE LAKE & CO Hazlitt House 28 Southampton
Buildings Chancery Lane, London WC2A 1AT (GB)

(54) **APPARATUS FOR CONTROLLING ROBOT.**

(57) A robot controlling apparatus which is small and economical. A visual sensor processing section (10) and a robot control section (20) are connected to a CRT (30) through a switch (52) and are connected to a keyboard (40) through a switch (55).

SPECIFICATION

TECHNICAL FIELD

The present contrivance relates to a robot control unit which is provided with a robot control section and a visual sensor processing section.

BACKGROUND ART

Conventionally, this kind of robot control unit has a robot control section and a visual sensor processing section which are housed in boxes independent of each other. That is, the both sections are each equipped with a CRT and a keyboard for the exclusive use of its own and are interconnected by a serial transmission line such as RS232C or the like.

Accordingly, the robot control unit calls for two CTRs and two keyboards, posing the problems of increased cost and floor space of the unit.

DISCLOSURE OF THE CONTRIVANCE

The present contrivance has been made in view of the above defect of the prior art, and has for its object to provide a robot control unit which is less expensive and consumes less floor space.

To attain the above objective, the present contrivance is arranged so that the robot control section and the visual sensor processing section share a CRT and a keyboard through switches.

BRIEF DESCRIPTION OF THE DRAWINGS

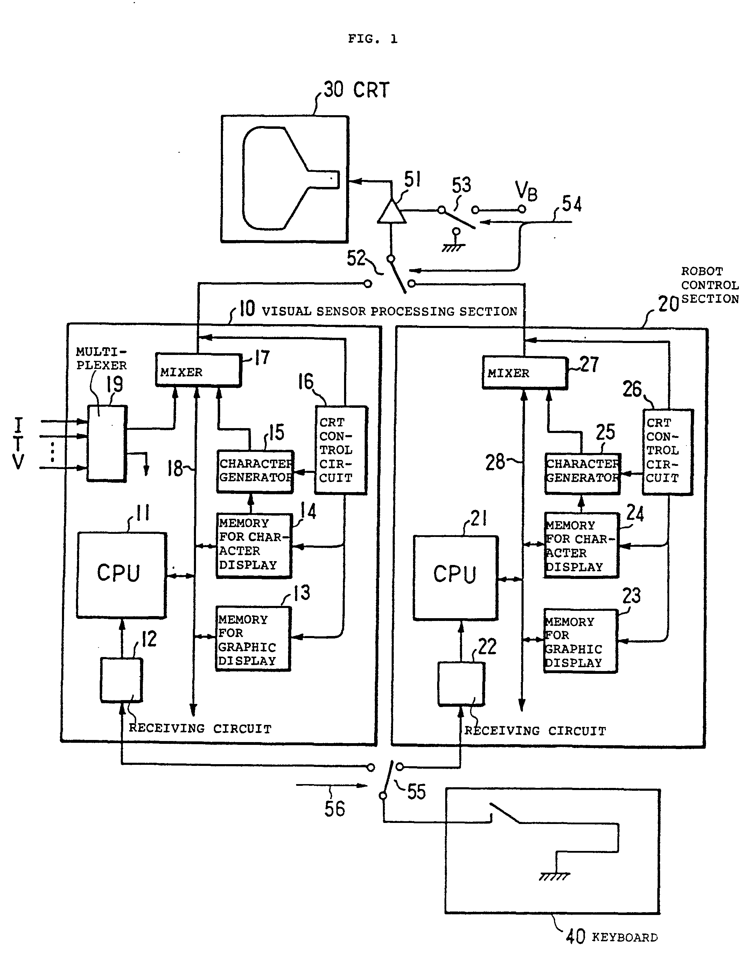

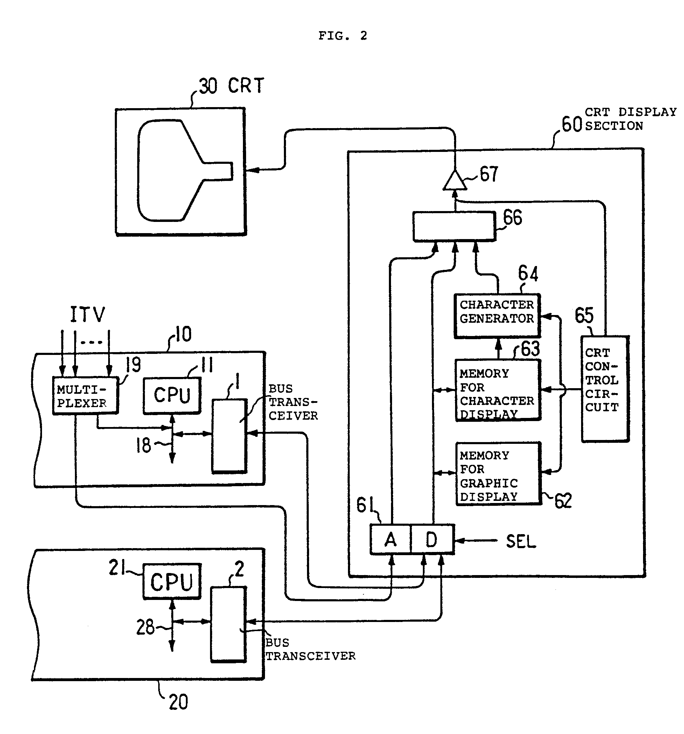

Fig. 1 is a block diagram illustrating the arrangement of an embodiment of the present contrivance; and Fig. 2 is a block diagram illustrating the arrangement of another embodiment of the present contrivance.

BEST MODE FOR CARRYING OUT THE CONTRIVANCE

Fig. 1 illustrates in block form the arrangement of an embodiment of the robot control unit of the present contrivance. Reference numeral 10 indicates a visual sensor processing section, 20 a robot control section, 30 a CRT and 40 a keyboard.

The visual sensor processing section 10 and the robot control section 20 respectively have, as parts for providing a display on the CRT, CPUs 11 and 21, receiving circuits 12 and 22, memories for graphic display 13 and 23, memories for character display 14 and 24, character generators 15 and 25, CRT control circuits 16 and 26, mixers 17 and 27 and buses 18 and 28. Further, the visual sensor processing section 10 is provided with a multiplexer 19 for receiving image signals from a plurality of ITV cameras.

Incidentally, the visual sensor processing section 10 and the robot control section 20 are each provided with various function parts such as an image signal processing part, a motor control part and so forth, but they are not shown and only parts directly related to the provision of a display on the CRT are shown.

- 3 -

Graphic display data from the memory for graphic display 13 or 23, or character display data from the character generator 16 or 26 is applied to the mixer 17 or 27, thereafter being provided via a switch 52 and a buffer amplifier 51 to the CRT 30, together with horizontal and vertical synchronizing signals provided from the CRT control circuit 16 or 26. In the case of displaying the data from the visual sensor processing section 10 on the CRT 30, the switch 52 is connected to the side of the visual sensor processing section 10 by a switching signal on a signal line 54. For displaying the data from the robot control section 20 on the CRT 30, the switch 52 is connected to the side of the robot control section 20 by a switching signal on the signal line 54. In order not to let the operator see uncomfortable disordrs of display on the CRT 30 which are attendant on the change-over of the switch 52, a switch 53 is changed over to the grounding potential side in synchronism with the change-over of the switch 52 and held there for a predetermined period of time, performing a blanking operation only while the display is in disorder.

On the other hand, a key input from the keyboard 40 is provided to the CPU 11 or 21 via a switch 55 and the receiving circuit 12 or 22. In the case of inputting the data from the keyboard 40 into the visual sensor processing section 10, the switch 55 is connected to the side of the

0163737

visual sensor processing section 10 by a switching signal on a signal line 56. For inputting the data from the keyboard 40 into the robot control section 20, the switch 55 is connected to the side of the robot control section 20 by a switching signal on the signal line 56.

In a preferred embodiment of the present contrivance, the visual sensor processing section 10, the robot control section 20, the CRT 30 and the keyboard 40 are all packaged in single housing, ensuring a substantial saving in floor space as conpared with prior art.

Fig. 2 illustrates  in block form the arrangement of another embodiment of the present contrivance, in which the same constituent elements as those in Fig. 1 are identified by the same reference numerals.

In this embodiment, the parts related to the display on the CRT are extracted from the visual sensor processing section 10 and the robot control section 20 and a common CRT display section 60 is constructed.  The common CRT display section 60 is provided with a multiplexer 61, a memory for graphic display 62, a memory for character display 63, a character generator 64, a CRT control circuit 65, a mixer 66 and a buffer amplifier 67.  The multiplexer 61 is divided into an analog part A and a digital part D.  The analog part A has input/output terminals connected to the multiplexer 19 of the visual sensor processing section 10, and the digital part D has input/output terminals respectively coknected to a bus transceiver 1 of the visual sensor processing section 10 and a bus transceiver 2 of the robot control section 20. The input/output terminals are each selected by a select signal SEL which is supplied from the outside.

According to this embodiment, the arrangement of the control unit is further simplified by sharing the visual sensor processing section.

As described above, since the present contrivance is arranged so that the robot control section and the visual sensor processing section share a CRT and a keyboard through switches, the contrivance has the advantage of providing a robot control unit which is low in cost and small in floor space.

0163737

# C L A I M

A robot control unit which is provided with a robot control section and a visual sensor processing section, characterized in that the robot control section and the visual sensor processing section share a CRT and a keyboard through switches.

FIG. 1

FIG. 2

# INTERNATIONAL SEARCH REPORT

International Application No. PCT/JP84/00480

**I. CLASSIFICATION OF SUBJECT MATTER** (if several classification symbols apply, indicate all) [3]

According to International Patent Classification (IPC) or to both National Classification and IPC

Int.Cl[4] B25J19/04

**II. FIELDS SEARCHED**

Minimum Documentation Searched [4]

| Classification System | Classification Symbols |
|---|---|
| IPC | B25J9/00–9/22, 13/00–13/08, 19/00–19/06, B66B3/00–3/02 |

Documentation Searched other than Minimum Documentation
to the Extent that such Documents are Included in the Fields Searched [5]

| | |
|---|---|
| Jitsuyo Shinan Koho | 1970 – 1983 |
| Kokai Jitsuyo Shinan Koho | 1971 – 1983 |

**III. DOCUMENTS CONSIDERED TO BE RELEVANT** [14]

| Category* | Citation of Document, [16] with indication, where appropriate, of the relevant passages [17] | Relevant to Claim No. [18] |
|---|---|---|
| Y | JP, A, 58-53374 (Mitsubishi Electric Corp.) 29 March 1983 (29. 03. 83) Page 3, upper right column, lines 2 to 20 and Fig. 3 (Family nashi) | 1 |
| Y | JP, A, 57-194895 (Toshiba Corp.) 30 November 1982 (30. 11. 82) Page 2, upper left column, line 14 to upper right column, line 1 and Fig. 4 (Family nashi) | 1 |
| Y | JP, A, 57-124575 (Mitsubishi Electric Corp.) 3 August 1982 (03. 08. 82) Page 2, lower left column, line 10 to lower right column, line 9 and (Figs. 3, 4 (Family nashi) | 1 |
| Y | JP, U, 58-140952 (Toshiba Corp.) 22 September 1983 (22. 09. 83) Figs. 6, 7 (Family nashi) | 1 |

* Special categories of cited documents: [19]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| January 7, 1985 (07. 01. 85) | January 14, 1985 (14. 01. 85) |
| International Searching Authority [1] | Signature of Authorized Officer [20] |
| Japanese Patent Office | |

Form PCT/ISA/210 (second sheet) (October 1981)